# EUROPEAN PATENT APPLICATION

(11) **EP 4 455 955 A1**
(43) Date of publication of application: **30.10.2024**
(21) Application number: 23315103.4
(22) Date of filing: 25.04.2023
(51) Int. Cl.: G06Q 10/04, G06Q 10/0631, G06Q 10/20

(54) **A METHOD FOR DETERMINING A STRATEGY TO CARRY OUT MAINTENANCE TASKS, USING MULTI-MODES RESOURCES, ON STRUCTURAL ELEMENTS OF A GIVEN WIND FARM**

(71) Applicant: TOTALENERGIES ONETECH, 92400 Courbevoie (FR)
(72) Inventor: Bougoüin, Baptiste, 92400 COURBEVOIE (FR); Estecahandy, Maïder, 92400 COURBEVOIE (FR)
(74) Representative: Lavoix

(57) **Abstract**

The invention relates to a method for determining a strategy to carry out maintenance tasks, using multi-modes resources, on structural elements of a given wind farm (10), the resources being divided into categories having several modes, the method comprising:
- obtaining wind farm data,
- obtaining a primary scenario characterizing the resources enabling to carry out maintenance tasks on the structural elements of the wind farm (10),
- determining several possible temporal evolutions of the functioning of the wind farm (10) over a given time period as a function of the wind farm data and of the primary scenario, and
- determining a strategy for using resources to carry out maintenance tasks on structural elements of the given wind farm (10), on the basis of the temporal evolutions.

## Description

### TECHNICAL FIELD OF THE INVENTION

The present invention concerns a method for determining a strategy to carry out maintenance tasks, using multi-modes resources, on structural elements of a given wind farm. The present invention also concerns an associated computer program product. The present invention also relates to an associated readable information carrier.

### BACKGROUND OF THE INVENTION

Preparing for the energy transition is one of the major concerns nowadays. In particular, in 2019 in France, the share of renewable energies in the production of electricity was around 20%. Among them, the share of wind power amounted to 6% and was exclusively implemented on land. From 2022, new offshore wind farm projects are emerging on the coasts and raise new questions for the offshore wind industry to meet the objectives of increasing the share of renewable energies.

To this end, operation and maintenance (O&M) models have been developed to help in the decision making process of the best O&M strategy to be applied in order to obtain an optimum between the Operating Expenditure (OPEX) and the Production Based Availability (PBA) for a given farm.

An O&M model allows a temporal simulation of the life of a wind farm, by modeling the architecture of the system (power curve, redundancy...) and by simulating its behavior via the Monte Carlo simulation method, which takes into account the occurrences of statistical and probabilistic events affecting the production such as:
- inspections and preventive maintenance: carried out in a calendar manner and defined in relation to the design of the installations, but whose starting conditions may depend on the operational environment,
- breakdowns and production stoppages: occurring in a random or conditioned manner depending on the failure rates of the different equipment of the wind farm and its operating ranges, and
- corrective maintenance: carried out in response to breakdowns and production stoppages and using the resources of the O&M strategy such as operational personnel, logistics resources or spare parts, which may also depend on the operational environment.

The current software on the market enabling to determine the PBA of a wind farm largely simplify the calculations. In particular, such software only allows the use of simplified operation and maintenance strategies, which are not realistic. These simplifications do not allow for an accurate and rigorous estimation of the production based availability, and the building of a well-adapted maintenance and operation strategy.

### SUMMARY OF THE INVENTION

There exists a need for a method enabling to determine in a more precise way a maintenance and operation strategy adapted for a given wind farm considering the production based availability of the wind farm.

To this end, the invention relates to a method for determining a strategy to carry out maintenance tasks, using multi-modes resources, on structural elements of a given wind farm, the resources being divided into categories, each category of resources having several modes, the method comprising the following steps which are computer-implemented:
- obtaining wind farm data relative to features of the wind farm,
- obtaining a primary scenario characterizing the resources enabling to carry out maintenance tasks on the structural elements of the wind farm, the primary scenario associating each maintenance task with one or several modes for each category of resources, at least a maintenance task being associated with several modes for a same category of resources,
- determining several possible temporal evolutions of the functioning of the wind farm over a given time period as a function of the wind farm data and of the primary scenario, some of the temporal evolutions implying non-productive events requesting to carry out maintenance task(s) on some structural elements of the wind farm, the non-productive events being ended with the use of the mode(s) of each resource as defined in the primary scenario, at least one non-productive event being ended with the use of several modes of a same category of resources,
- determining at least an indicator relative to the production of the wind farm over the given time period on the basis of the determined temporal evolutions, and
- determining a strategy for using resources to carry out maintenance tasks on structural elements of the given wind farm, on the basis of the primary scenario and of the determined indicator.

The method according to the invention may comprise one or more of the following features considered alone or in any combination that is technically possible:
- the strategy determination step comprises:
   - obtaining at least an alternative scenario, the alternative scenario(s) differing from the primary scenario by different association of maintenance task(s) and modes of resources of each category,
   - repeating the steps for determining temporal evolutions and for determining at least an indicator by replacing the primary scenario by the or each alternative scenario, and
   - selecting a scenario among the primary scenario and the alternative scenario(s) on the basis of the determined indicators and on production criteria, the selected scenario defining a strategy for using resources to carry out maintenance tasks on structural elements of the given wind farm ;
- the production criteria state that the selected scenario is the scenario minimizing or maximizing at least a type of determined indicator;
- the determined indicator is at least one of the following indicator: an indicator relative to the production based availability of the wind farm and an indicator relative to a cost of the maintenance tasks likely to occur on the wind farm;
- the step for determining the temporal evolutions is carried out by a simulator, for example using a Monte-Carlo algorithm;
- the step for determining the temporal evolutions uses past meteorological data relative to the geographical zone of the given wind farm, preferably the meteorological data comprising wind data and sea data when the wind farm is an offshore wind farm, the sea data being relative to waves data and/or sea current;
- the time for overcoming the non-productive events during the temporal evolutions is variable depending on variable availabilities of the modes of resources requested to end the non-productive events, as defined in the primary scenario;
- the categories of resources comprise at least one of the following categories: transport means, operators and spare pieces, preferably:
   - the modes of the category transport means comprising at least one of the following modes: vessel, helicopter, crew transfer vessel, service operation vessel, remotely operated vehicle and jack-up vessel.
   - the modes of the category operators comprising at least one of the following modes: technician, mechanic and electrician.
   - the modes of the category spare pieces comprising at least one of the following modes: yaw system, generator and gearbox;
- the structural elements comprise at least one of the following set of elements: wind turbines, wind cables, support structures, onshore substation(s) and offshore substation(s);
- the primary scenario also defines a priority order for the maintenance tasks to be carried out on the structural elements, when several non-productive events occur at the same time during the temporal evolutions, the modes of resources requested to end the non-productive events being made available depending on the priority order defined in the primary scenario;
- the wind farm data comprise at least one of the following elements:
   - data relative to the wind turbines,
   - data relative to wind farm design,
   - data relative to failure rates of the wind turbines,
   - data relative to scheduled maintenance and inspection,
   - data relative to safety test,
   - data relative to spare part management, and
   - data relative to curative maintenance;
- the wind farm data comprise at least one piece of data obtained through a measurement performed by a sensor;
- the method comprises a step of setting up the resources corresponding to the determined strategy so that the resources be available during the effective functioning of the wind farm.

The invention also relates to a computer program product comprising a readable information carrier having stored thereon a computer program comprising program instructions, the computer program being loadable onto a data processing unit and causing a method as previously described to be carried out when the computer program is carried out on the data processing unit.

The invention also relates to a readable information carrier on which is stored a computer program product as previously described.

### BRIEF DESCRIPTION OF THE DRAWINGS

The invention will be easier to understand in view of the following description, provided solely as an example and with reference to the appended drawings in which:
- Figure 1 is a schematic view of an example of a wind farm on land,
- Figure 2 is a schematic view of an example of an offshore wind farm with one floating wind turbine in failure, a vessel being on its way for repairing the broken turbine,
- Figure 3 is a schematic view of an example of a computer for implementing a method for determining a strategy to carry out maintenance tasks, using multi-modes resources, on structural elements of a given wind farm,
- Figure 4 is a flowchart of an example of implementation of a method for determining a strategy to carry out maintenance tasks, using multi-modes resources, on structural elements of a given wind farm, and
- Figure 5 is an example of different categories of resources, each resource having different modes.

### DETAILED DESCRIPTION OF SOME EMBODIMENTS

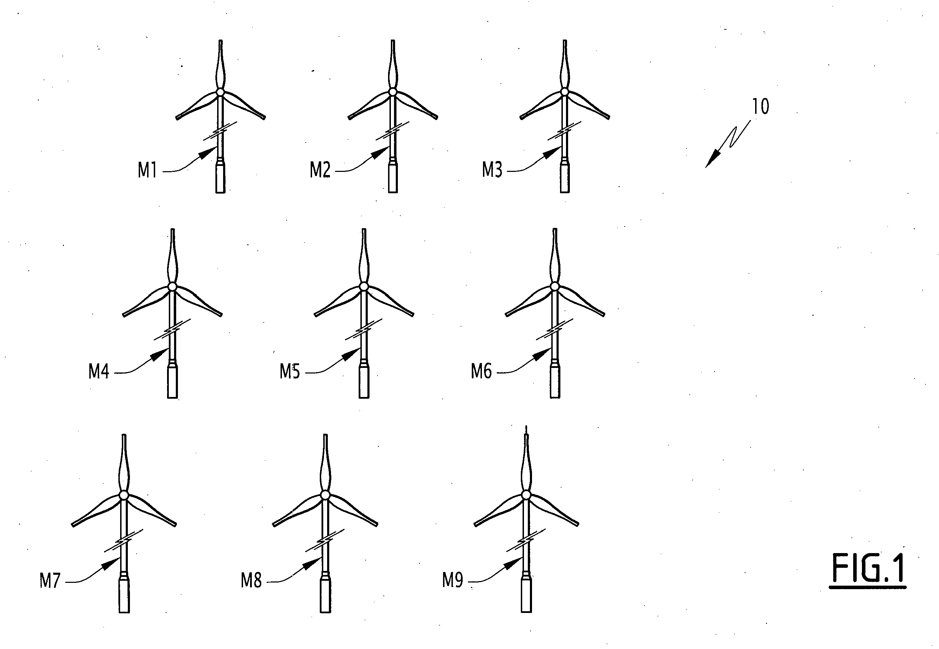

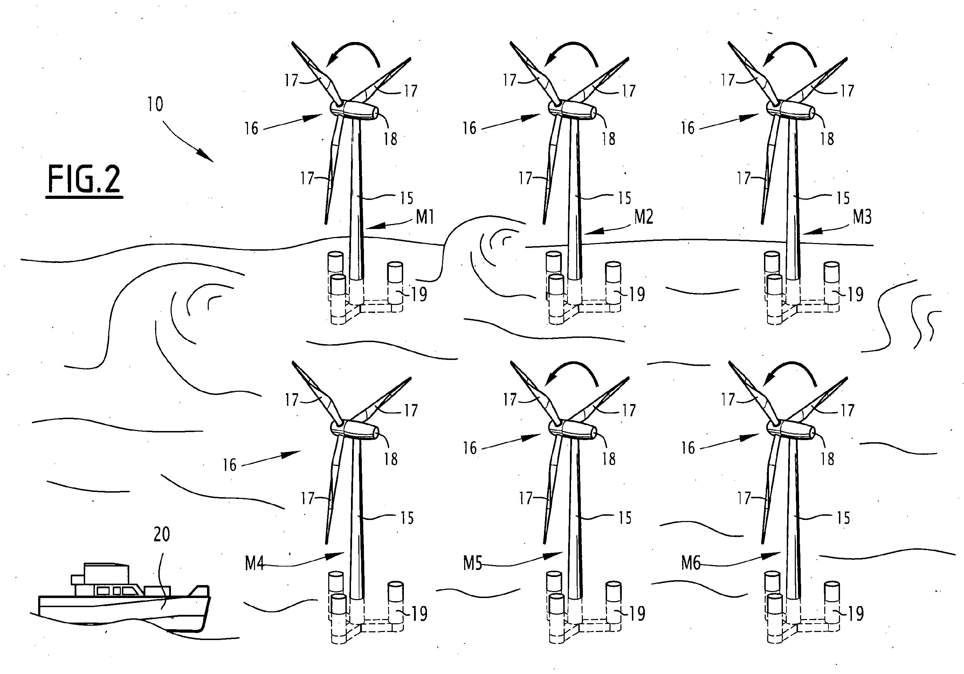

An example of a wind farm 10 is illustrated on figures 1 and 2. A wind farm or wind park, also called a wind power station or wind power plant, is a group of wind turbines in the same location used to produce electricity. Wind farms vary in size from a small number of turbines to several hundred wind turbines covering an extensive area.

The wind farm 10 comprises a plurality of wind turbines Mᵢ.

In the example of figure 1, the wind farm 10 is a wind farm on land, comprising nine turbines M1 to M9. However, the invention also applies to wind farms having less (at least two) or more turbines Mᵢ, even to large wind farms which are wind farms having at least 20 turbines.

In a variant, the wind farm 10 is an offshore wind farm comprising several wind turbine Mᵢ, such as floating wind turbines Mᵢ. A floating wind turbine is an offshore wind turbine mounted on a floating structure that allows the turbine to generate electricity in water depths particularly where fixed-foundation turbines are not feasible. In a variant, the wind turbines Mᵢ of the offshore wind farm 10 are fixed-foundation turbines.

In the example of figure 2, the offshore wind farm 10 comprises six floating wind turbines M1 to M6. However, the invention also applies to wind farms having less (at least two) or more floating wind turbines Mᵢ.

Typically, as illustrated for two floating wind turbines Mᵢ of figure 2, each floating wind turbine Mᵢ comprises a mast 15, a rotor 16 made of blades 17 (generally three), a nacelle 18 and a floater 19.

In particular, on the example of figure 2, one of the floating wind turbine Mᵢ (bottom left) has a turbine failure so that the turbine Mᵢ does not work. This has an impact on the production based availability of the wind farm 10. Consequently, a vessel 20 with a maintenance team is sent to repair the broken turbine Mᵢ.

More generally, a wind farm 10 comprises structural elements Es, the wind turbines Mᵢ being examples of structural elements E_{S}. Other examples of structural elements E_{S} are: wind cables, support structures, onshore substation(s) and offshore substation(s).

The wind cables are typically cables connecting the wind turbines to each other or to onshore substation(s) or offshore substation(s).

The support structures are all the elements supporting the turbines and the masts, such as monopiles, floats, or anchors.

An offshore substation is for example an offshore platform on which are stored for example operation and maintenance resources. An onshore substation is for example an onshore platform on which are stored for example operation and maintenance resources.

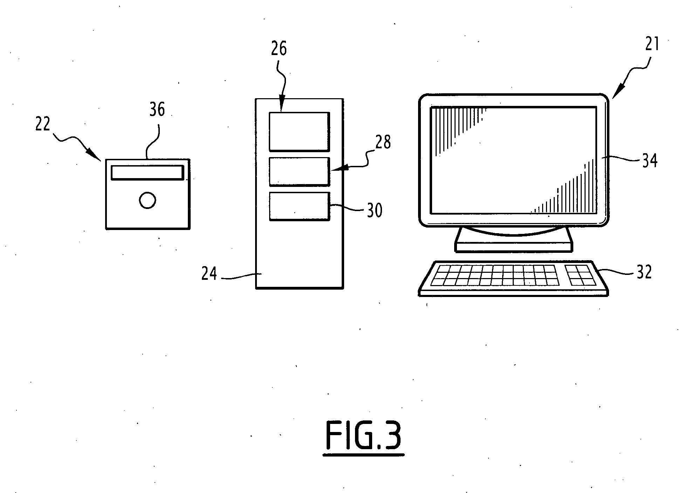

A calculator 21 is illustrated on figure 3.

The calculator 21 is preferably a computer.

More generally, the calculator 21 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 21 interacts with the computer program product 22.

As illustrated on figure 2, the calculator 21 comprises a processor 24 comprising a data processing unit 26, memories 28 and a reader 30 for information media. In the example illustrated on figure 2, the calculator 21 comprises a human machine interface 32, such as a keyboard, and a display 34.

The computer program product 22 comprises an information medium 36.

The information medium 36 is a medium readable by the calculator 21, usually by the data processing unit 26. The readable information medium 36 is a medium suitable for storing electronic instructions and capable of being coupled to a computer system bus.

By way of example, the information medium 36 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 36 is stored the computer program 22 comprising program instructions.

The computer program 22 is loadable on the data processing unit 26 and is adapted to entail the implementation of a method for determining a strategy to carry out maintenance tasks, using multi-modes resources, on structural elements Es of a given wind farm 10, when the computer program 22 is loaded on the processing unit 26 of the calculator 21.

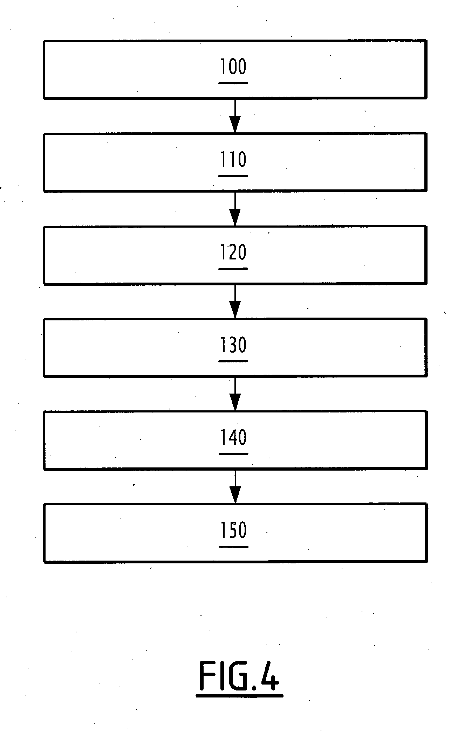

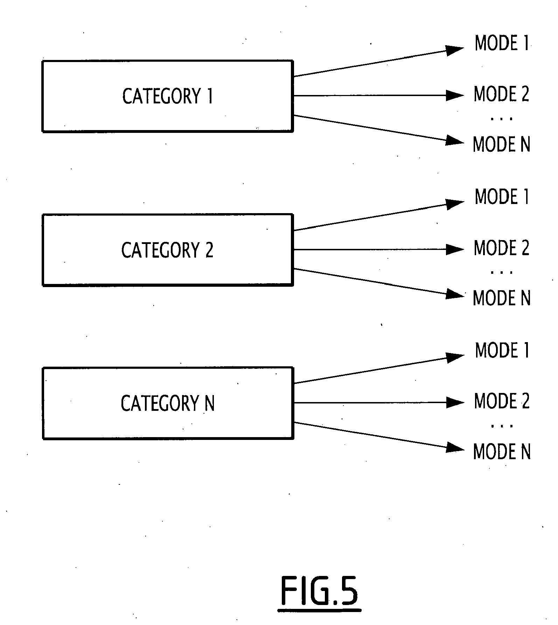

Operation of the calculator 21 will now be described with reference to figure 4, which diagrammatically illustrates an example of implementation of a method for determining a strategy to carry out maintenance tasks, using multi-modes resources, on structural elements E_{S} of a given wind farm 10, and to figure 5, which illustrates examples of categories of resources, used in the method.

The determination method comprises a step 100 for obtaining wind farm data relative to features of the wind farm 10. The wind farm 10 is an existing wind farm such as the wind farms 10 of figure 1 or 2. The obtaining step 100 is, for example, implemented by the calculator 21 interacting with the computer program product 22, that is to say is computer-implemented.

Preferably, the wind farm data comprise at least one of the following elements:
- data relative to the wind turbines Mᵢ (dimensions, numbers, costs),
- data relative to wind farm design (relative location of the wind turbines Mᵢ, GPS position),
- data relative to failure rates of the wind turbines Mᵢ,
- data relative to scheduled maintenance and inspection (frequency, duration, repair team, logistics...),
- data relative to safety test (frequency, duration, repair team, logistics...),
- data relative to spare part management (initial stock, procurement time, ...), and
- data relative to curative maintenance (repair team, conditions, logistics...).

In an example, the wind farm data comprise at least one piece of data obtained through a measurement performed by a sensor on a wind turbine Mᵢ. The piece of data is for example the failure rates of the wind turbines Mᵢ.

The determination method comprises a step 110 for obtaining a primary scenario characterizing the resources enabling to carry out maintenance tasks on the structural elements Es of the wind farm 10. The obtaining step 110 is, for example, implemented by the calculator 21 interacting with the computer program product 22, that is to say is computer-implemented.

In an example, the primary scenario was built by an operator.

The maintenance tasks are for example an inspection of a structural element Es (wind turbine Mᵢ), a maintenance performed on a structural element E_{S} (wind turbine Mᵢ), or a repair of a structural element E_{S} (wind turbine Mᵢ).

Each maintenance task is associated, in the primary scenario, with one or several modes for each category of resources. At least a maintenance task is associated with several modes for a same category of resources (resources multi-modes). Figure 5 illustrates an example of different categories of resources and different modes for each category.

Hence, in an example, a task consisting in repairing a wind turbine is associated with the mode technician and the mode electrician for the category of resource "operator". This means that these two operators are needed to carry out the task and end a non-productive event.

Preferably, the categories of resources comprise at least one of the following' categories: transport means, operators and spare pieces.

In an example, the modes of the category transport means comprise at least one of the following modes: vessel, helicopter, CTV (crew transfer vessel), SOV (service operation vessel), ROV (remotely operated vehicle) and jack-up vessel.

In an example, the modes of the category operators comprise at least one of the following modes: technician, mechanic and electrician.

In an example, the modes of the category spare pieces comprise at least one of the following modes: yaw system, generator and gearbox.

Preferably, the primary scenario also defines a priority order for the maintenance tasks to be carried out on the structural elements Es. In an example, each maintenance task associated to a given structural element Es has an assigned priority.

The determination method comprises a step 120 for determining several possible temporal evolutions of the functioning of the wind farm 10 over a given time period as a function of the wind farm data and of the primary scenario. The obtention step 120 is, for example, implemented by the calculator 21 interacting with the computer program product 22, that is to say is computer-implemented.

The possible temporal evolutions are for example time series extending over the given time period divided in timesteps. The given time period is for example one or several years. The timesteps are for example 10 minutes or one or several hours.

Some (or all) of the temporal evolutions implies non-productive events requesting to carry out maintenance task(s) on some structural elements E_{S} of the wind farm 10. The non-productive events are ended with the use of the mode(s) of each resource as defined in the primary scenario when such resources are available. At least one non-productive event is ended with the use of several modes of a same category of resources.

For example, at least a non-productive event is one of the following events:
- inspection and preventive maintenances, which are for example carried out in a scheduled manner and defined in relation to the design of the facilities, but whose start-up conditions may depend on the operational environment,
- failure and production shutdowns, which are for example occurring in a random or conditioned manner depending on the failure rates of the different equipment of the wind farm 10 and its operating ranges, and
- curative maintenance, which are for example carried out in reaction to failures and production stoppages and implementing the means of the operation and maintenance strategy such as operational personnel, logistical means or spare parts that may also depend on the operational environment.

Preferably, when several non-productive events occur at the same time during the temporal evolutions, the modes of resources requested to end the non-productive events are made available depending on the priority order defined in the primary scenario.

Preferably, the time for overcoming the non-productive events during the temporal evolutions is variable depending on variable availabilities of the modes of resources requested to end the non-productive events, as defined in the primary scenario. For example, the availability of the resources is variable as a function of the time of the year. In an example, there is less resources available during summer (due to vacations) than during other months of the year.

Preferably, the step 120 for determining the temporal evolutions uses past meteorological data relative to the geographical zone of the given wind farm 10. Preferably, the meteorological data comprise wind data and sea data when the wind farm 10 is an offshore wind farm, the sea data being relative to waves data and/or sea current.

In an example, the meteorological data are data obtained through measurements performed by at least one sensor (ex: anemometer, thermometer, hygrometer, waves sensor...).

In an example of implementation, the step 120 is carried out by a simulator, for example using a Monte-Carlo algorithm.

Preferably, the simulator is compliant with a Model Based Safety Assessment (MBSA) modeling. MBSA is an approach that consists of building high-level models that are closer to the descriptions of functional and physical architectures of systems, while remaining assessable by the tools for calculating safety indicators.

The determination method comprises a step 130 for determining at least an indicator relative to the production of the wind farm 10 over the given time period on the basis of the determined temporal evolutions. The determination step 130 is, for example, implemented by the calculator 21 interacting with the computer program product 22, that is to say is computer-implemented.

Preferably, the determined indicator is at least one of the following indicator: an indicator relative to the production based availability of the wind farm 10 and an indicator relative to a cost of the maintenance tasks likely to occur on the wind farm 10.

The production based availability is, for example, calculated as being the ratio between the mean of the production of the determined temporal evolutions and an expected production.

The costs of the maintenance comprise preferably the operation expenditure.

The costs of the maintenance is, for example, obtained on the basis of calculating aa sum of the costs of the resources for each temporal evolution and then calculating the mean of the sums obtained for all the temporal evolutions.

In an example, each resource is associated with a dedicated cost enabling to determine the cost relative to the use of this resource for overcoming a non-productive event. In an example, some resources are external resources, also called vendor resources, such resources being associated to a cost, which might be different from the cost of internal resources.

The determination method comprises a step 140 for determining a strategy for using resources to carry out maintenance tasks on structural elements E_{S} of the given wind farm 10, on the basis of the primary scenario and of the determined indicator. The determination step 140 is, for example, implemented by the calculator 21 interacting with the computer program product 22, that is to say is computer-implemented.

In an example of embodiment, the strategy determination step comprises:
- obtaining at least an alternative scenario, the alternative scenario(s) differing from the primary scenario by different association of maintenance task(s) and modes of resources of each category. The or each alternative scenario is for example determined by an operator as a function of the primary scenario and the indicators determined for the primary scenario, and so as to improve such indicators for the alternative scenario.
- repeating the steps for determining temporal evolutions and for determining at least an indicator by replacing the primary scenario by the or each alternative scenario, and
- selecting a scenario among the primary scenario and the alternative scenario(s) on the basis of the determined indicators and on production criteria, the selected scenario defining a strategy for using resources to carry out maintenance tasks on structural elements E_{S} of the given wind farm 10.

Preferably, the production criteria state that the selected scenario is the scenario minimizing or maximizing at least a type of determined indicator. For example, the production criteria state that the selected scenario is the scenario maximizing an indicator relative to the production based availability and/or minimizing an indicator relative to the maintenance costs.

Preferably, the determination method comprises a step 150 for setting up the resources corresponding to the determined strategy so that the resources be available during the effective functioning of the wind farm 10. In an example, the step 150 comprises sizing the resources, and the building of a protocol controlling the availability of the resources.

Hence, the above method allows taking into account multi-mode resources (several modes for a same category of resources) simultaneously to carry out maintenance tasks. This enables a more realistic evaluation of the impact of the maintenance on the production of a wind farm 10. This also enables determining in a more precise way a maintenance and operation strategy for a given wind farm 10 considering the production based availability of the wind farm 10. In addition, this enables to be more precise in the evaluation of the maintenance costs.

The person skilled in the art will understand that the embodiments and variants described above can be combined provided that they are technically compatible. They apply to both a wind farm on land and an offshore windfarm.

## Claims

1. A method for determining a strategy to carry out maintenance tasks, using multi-modes resources, on structural elements (Es) of a given wind farm (10), the resources being divided into categories, each category of resources having several modes, the method comprising the following steps which, are computer-implemented:
- obtaining wind farm data relative to features of the wind farm (10),
- obtaining a primary scenario characterizing the resources enabling to carry out maintenance tasks on the structural elements (E_{S}) of the wind farm (10), the primary scenario associating each maintenance task with one or several modes for each category of resources, at least a maintenance task being associated with several modes for a same category of resources,
- determining several possible temporal evolutions of the functioning of the wind farm (10) over a given time period as a function of the wind farm data and of the primary scenario, some of the temporal evolutions implying non-productive events requesting to carry out maintenance task(s) on some structural elements (E_{S}) of the wind farm (10), the non-productive events being ended with the use of the mode(s) of each resource as defined in the primary scenario, at least one non-productive event being ended with the use of several modes of a same category of resources,
- determining at least an indicator relative to the production of the wind farm (10) over the given time period on the basis of the determined temporal evolutions, and
- determining a strategy for using resources to carry out maintenance tasks on structural elements (Es) of the given wind farm (10), on the basis of the primary scenario and of the determined indicator.

2. A method according to claim 1, wherein the strategy determination step comprises:
- obtaining at least an alternative scenario, the alternative scenario(s) differing from the primary scenario by different association of maintenance task(s) and modes of resources of each category,
- repeating the steps for determining temporal evolutions and for determining at least an indicator by replacing the primary scenario by the or each alternative scenario, and
- selecting a scenario among the primary scenario and the alternative scenario(s) on the basis of the determined indicators and on production criteria, the selected scenario defining a strategy for using resources to carry out maintenance tasks on structural elements (Es) of the given wind farm (10).

3. A method according to claim 2, wherein the production criteria state that the selected scenario is the scenario minimizing or maximizing at least a type of determined indicator.

4. A method according to any one of claims 1 to 3, wherein the determined indicator is at least one of the following indicator: an indicator relative to the production based availability of the wind farm (10) and an indicator relative to a cost of the maintenance tasks likely to occur on the wind farm (10).

5. A method according to any one of claims 1 to 4, wherein the step for determining the temporal evolutions is carried out by a simulator, for example using a Monte-Carlo algorithm.

6. A method according to any one of claims 1 to 5, wherein the step for determining the temporal evolutions uses past meteorological data relative to the geographical zone of the given wind farm (10), preferably the meteorological data comprising wind data and sea data when the wind farm (10) is an offshore wind farm, the sea data being relative to waves data and/or sea current.

7. A method according to any one of claims 1 to 6, wherein the time for overcoming the non-productive events during the temporal evolutions is variable depending on variable availabilities of the modes of resources requested to end the non-productive events, as defined in the primary scenario.

8. A method according to any one of claims 1 to 7, wherein the categories of resources comprise at least one of the following categories: transport means, operators and spare pieces, preferably:
- the modes of the category transport means comprising at least one of the following modes: vessel, helicopter, crew transfer vessel, service operation vessel, remotely operated vehicle and jack-up vessel.
- the modes of the category operators comprising at least one of the following modes: technician, mechanic and electrician.
- the modes of the category spare pieces comprising at least one of the following modes: yaw system, generator and gearbox.

9. A method according to any one of claims 1 to 8, wherein the structural elements (Es) comprise at least one of the following set of elements: wind turbines, wind cables, support structures, onshore substation(s) and offshore substation(s).

10. A method according to any one of claims 1 to 9, wherein the primary scenario also defines a priority order for the maintenance tasks to be carried out on the structural elements (Es), when several non-productive events occur at the same time during the temporal evolutions, the modes of resources requested to end the non-productive events being made available depending on the priority order defined in the primary scenario.

11. A method according to any one of claims 1 to 10, wherein the wind farm data comprise at least one of the following elements:
- data relative to the wind turbines (Mᵢ),
- data relative to wind farm design,
- data relative to failure rates of the wind turbines (Mᵢ),
- data relative to scheduled maintenance and inspection,
- data relative to safety test,
- data relative to spare part management, and
- data relative to curative maintenance.

12. A method according to any one of claims 1 to 11, wherein the wind farm data comprise at least one piece of data obtained through a measurement performed by a sensor.

13. A method according to any one of claims 1 to 12, wherein the method comprises a step of setting up the resources corresponding to the determined strategy so that the resources be available during the effective functioning of the wind farm (10).

14. A computer program product comprising a readable information carrier having stored thereon a computer program comprising program instructions, the computer program being loadable onto a data processing unit and causing a method according to any one of claims 1 to 13 to be carried out when the computer program is carried out on the data processing unit.

15. A readable information carrier on which is stored a computer program product according to claim 14.
